# FASCICULE DE BREVET EUROPEEN

(11) **EP 0 538 130 B1**
(45) Date de publication et mention de la délivrance du brevet: **15.03.1995**
(21) Numéro de dépôt: 92402815.2
(22) Date de dépôt: 15.10.1992
(51) Int. Cl.: F16D 23/14

(54) **Tube-guide à étanchéité intégrée pour butée de débrayage de boîte de vitesses de véhicule automobile**
Führungshülse mit integrierter Dichtung für das Kupplungsausrücklager von Kraftfahrzeuggetrieben
Guide tube with an integrated sealing for a clutch release bearing in an automotive vehicle gearbox

(30) Priorité: 15.10.1991 FR 9112672
(43) Date de publication de la demande: 21.04.1993
(73) Titulaire: PROCAL, Société anonyme dite, 52200 Langres (FR)
(72) Inventeur: Caillaud, Claude, F-52200 Jorquenay (FR); Garcia, Louis-Claude, F-52200 Langres (FR)
(74) Mandataire: Leszczynski, André

(56) Documents cités:
- EP-A- 0 336 843
- DE-A- 4 040 990
- GB-A- 2 040 384

## Description

La présente invention est relative à un tube-guide à étanchéité intégrée pour butée de débrayage de boîte de vitesses de véhicule automobile.

D'une manière générale, les butées de débrayage coulissent sur un manchon tubulaire engagé axialement autour de l'arbre d'entrée de la boîte de vitesses et emmanché à force dans un alésage du carter de celle-ci. Une bague d'étanchéité du type à lèvres est interposée entre le carter et l'arbre d'entrée.

Dans les réalisations traditionnelles, la bague d'étanchéité est une pièce montée séparément du manchon formant tube-guide.

Cette solution présente l'inconvénient que, lorsqu'il devient nécessaire de changer la bague d'étanchéité par suite d'une usure de celle-ci, il faut procéder au démontage complet de la boîte de vitesses.

La Société Déposante a décrit dans FR-A-2618864, FR-A-2629539 et FR-A-2656395 des tubes-guides à étanchéité intégrée pour butée de débrayage de boîte de vitesses de véhicule automobile agencés pour permettre un démontage et un remplacement d'une garniture d'étanchéité défaillante en séparant la boîte de vitesses du moteur sans nécessiter de démontage de la boîte de vitesses elle-même.

De plus, les tubes-guides décrits dans les brevets antérieurs mentionnés ci-dessus de la Société Déposante permettent d'assurer, outre la fonction d'étanchéité dynamique vis-à-vis de l'arbre d'entrée de la boîte de vitesses, obtenue par appui sur ce dernier de la lèvre de la garniture d'étanchéité, d'une part un centrage du tube-guide par rapport au carter de la boîte de vitesses et d'autre part, une étanchéité statique entre le tube-guide et le carter.

La présente invention se propose de fournir une nouvelle structure de tube-guide à étanchéité intégrée assurant les mêmes fonctions que les tubes-guides antérieurs de la Société Déposante en étant d'une mise en oeuvre industrielle plus simple et économique.

La présente invention a pour objet un tube-guide à étanchéité intégrée pour butée de débrayage de boîte de vitesses de véhicule automobile tel que défini dans la revendication 1 dont le préambule mentionne les caractéristiques connues d'après FR-A-2629539. De préférence le bourrelet annulaire est réalisé à l'extrémité de la portée radiale de l'armature.

Lorsque la bague d'étanchéité est engagée à force à l'intérieur du manchon tubulaire du tube-guide, la portée radiale, dirigée vers l'extérieur, de l'armature de la bague d'étanchéité vient se disposer sensiblement parallèlement à la portée radiale prolongeant avec le manchon tubulaire du tube-guide, et le bourrelet annulaire réalisé à son extrémité assure ainsi un contact d'étanchéité statique entre la portée radiale du tube-guide et la face extérieure de la paroi du carter.

Le bourrelet annulaire d'étanchéité présente avantageusement une partie principale, par exemple de section sensiblement trapézoïdale, en saillie de la portée radiale de l'armature, qui le porte, en direction de la paroi du carter, le bourrelet annulaire d'étanchéité comportant de préférence en outre, sur la face opposée de la portée radiale de l'armature une partie permettant d'assurer l'étanchéité entre la portée radiale de ladite armature et la portée radiale formant platine de fixation du tube-guide.

Avantageusement, la portée radiale formant platine de fixation du tube-guide est déformée, au moins localement, pour présenter des zones de contact avec la portée radiale de l'armature de la bague d'étanchéité. Ainsi, selon l'invention, il est par exemple prévu une zone déformée en forme de couronne sur ladite portée radiale formant platine de fixation du tube-guide réalisant une nervure en saillie vers la portée radiale de l'armature. Cette zone est de préférence réalisée de façon à venir au contact de la portée radiale de l'armature, à faible distance, vers l'intérieur, du bourrelet annulaire d'étanchéité réalisé à l'extrémité de la portée radiale de l'armature.

Dans le but de mieux faire comprendre l'invention, on va maintenant en décrire un exemple de réalisation nullement limitatif en se référant au dessin annexé dans lequel :

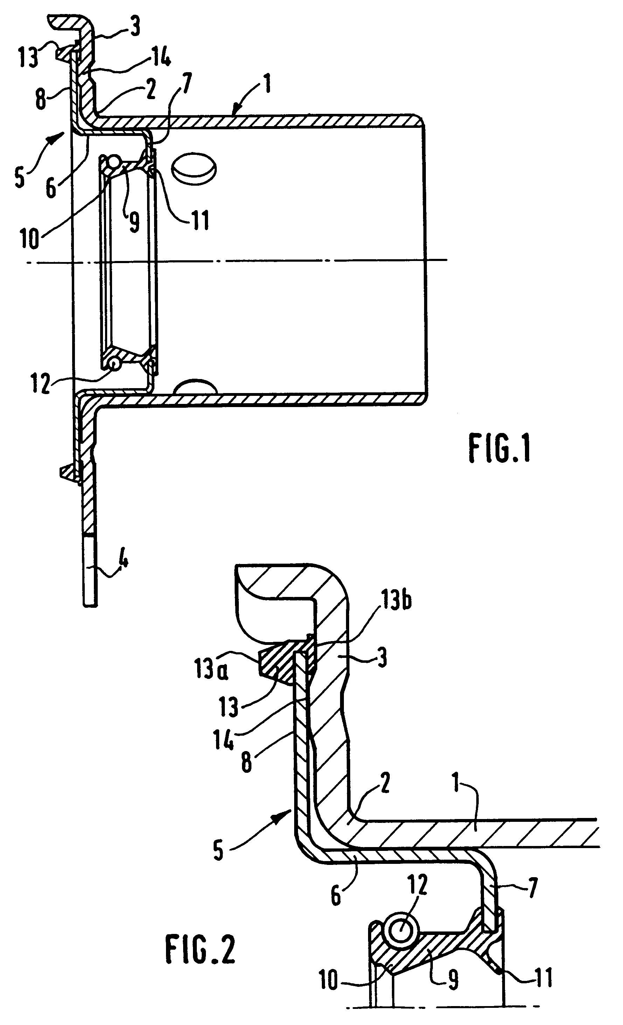

- la figure 1 est une vue en coupe longitudinale d'un tube-guide à étanchéité intégrée selon l'invention,
- la figure 2 est une vue de détail agrandie.

Le tube-guide selon l'invention comprend un manchon tubulaire métallique 1 raccordé à son extrémité frontale par un arrondi 2 à une portée radiale 3 munie de découpes périphériques 4 pour le passage d'organes de fixation, tels que des vis, sur la face extérieure d'un carter de boîte de vitesses (non représenté).

Le manchon tubulaire 1 est engagé autour de l'arbre d'entrée de la boîte de vitesses (non représenté) monté de manière conventionnelle dans un alésage du carter (également non représenté).

Une butée de débrayage (non représentée) coulisse de manière conventionnelle sur la paroi extérieure du manchon tubulaire.

Le tube-guide selon l'invention comporte, engagée à force à l'intérieur du manchon tubulaire 1, une bague d'étanchéité désignée globalement par 5, et comportant une armature formée d'une portée cylindrique 6 prolongée à une extrémité par une portée radiale 7 dirigée vers l'intérieur et à son autre extrémité par une portée radiale 8 dirigée vers l'extérieur.

La portée radiale 7, de plus faible étendue radiale, comporte à son extrémité une garniture d'étanchéité dynamique 9, comportant une lèvre d'étanchéité principale 10 et une lèvre d'étanchéité secondaire anti-poussières 11, la garniture 9 étant repoussée de manière conventionnelle en direction de l'arbre par un ressort jarretière 12.

A l'extrémité de l'autre portée radiale 8 de l'armature, il est prévu selon l'invention, un bourrelet annulaire 13 comportant une partie principale 13a destinée à réaliser une étanchéité statique entre la portée 8 et la face d'appui correspondante du carter et une partie 13b, destinée à réaliser une étanchéité statique entre la portée radiale 8 de l'armature et la portée radiale 3 lors du serrage des éléments de fixation engagés dans les découpes 4. La portée radiale 3 comporte une zone en couronne 14 en appui contre la face en regard de la portée radiale 8 de l'armature de la bague d'étanchéité 5.

Le bourrelet 13 se déforme par écrasement lors du montage du tube-guide contre la face extérieure du carter, ce qui assure une bonne étanchéité statique radiale entre le tube-guide et le carter.

Bien entendu, la forme illustrée du bourrelet 13 n'a aucun caractère limitatif.

De la même manière, la forme de la garniture d'étanchéité dynamique 9 n'est également pas limitative. La garniture 9 et le bourrelet 13 peuvent être réalisés en des matériaux élastomères différents et/ou de couleurs différentes.

La bague d'étanchéité comportant le bourrelet d'étanchéité statique 13 et la garniture d'étanchéité dynamique est avantageusement prémontée en usine dans le manchon tubulaire du tube-guide 1, constituant ainsi un ensemble unitaire jusqu'au montage.

## Revendications

1. Tube-guide à étanchéité intégrée pour butée de débrayage de boîte de vitesses de véhicule automobile, comportant un manchon tubulaire (1) apte à être engagé axialement autour de l'arbre d'entrée de la boîte de vitesses et présentant une portée radiale (3) d'un seul tenant, formant platine pour la fixation du tube-guide sur la face extérieure de la paroi du carter de la boîte de vitesses, et une bague d'étanchéité à lèvre, engagée à l'intérieur du manchon, et comportant une armature (5) comprenant une portée tubulaire (6) apte à être engagée à force dans le manchon tubulaire (1) du tube-guide, ladite portée tubulaire (6) étant prolongée à une de ses extrémités par une portée radiale (7) dirigée vers l'intérieur et à l'extrémité de laquelle est réalisée une garniture d'étanchéité à lèvre (9), caractérisé par le fait que ladite portée tubulaire (6), de l'armature (5) est prolongée à son autre extrémité par une portée radiale (8) dirigée vers l'extérieur et sur laquelle est réalisé un bourrelet annulaire d'étanchéité (13) apte à venir au contact de la face extérieure de la paroi du carter.

2. Tube-guide selon la revendication 1, caractérisé par le fait que ledit bourrelet annulaire (13) est réalisé à l'extrémité de la portée radiale (8) de l'armature (5).

3. Tube-guide selon la revendication 2, caractérisé par le fait que le bourrelet annulaire (5) comporte une partie (13a) en saillie de la portée radiale (8) de l'armature (5), qui le porte, en direction de la paroi du carter et, sur la face opposée de ladite portée radiale (8), une partie (13b) permettant d'assurer l'étanchéité entre ladite portée radiale (8) de l'armature (5) et la portée radiale (3) formant platine de fixation du tube-guide sur la face extérieure de la paroi du carter de la boîte de vitesses.

4. Tube-guide selon la revendication 3, caractérisé par le fait que la partie principale (13a) du bourrelet présente une section sensiblement trapézoïdale.

5. Tube-guide selon l'une quelconque des revendications précédentes, caractérisé par le fait que la portée radiale (3) formant platine de fixation du tube-guide est déformée, au moins localement pour présenter des zones de contact (14) avec la portée radiale (8) de l'armature de la bague d'étanchéité.

6. Tube-guide selon la revendication 5, caractérisé par le fait que ladite portée radiale (3) formant platine de fixation du tube-guide comporte une zone déformée en forme de couronne (14) réalisant une nervure en saillie vers la portée radiale (8) de l'armature (5).

7. Tube-guide selon la revendication 6, caractérisé par le fait que ladite zone déformée en forme de couronne (14) est réalisée de façon à venir au contact de la portée radiale (8) de l'armature (5) à faible distance, vers l'intérieur, du bourrelet annulaire d'étanchéité (13).

## Claims

1. Guide tube with integrated sealing for clutch release bearing in an automotive vehicle gearbox, comprising a tubular sleeve (1) adapted to be engaged axially around the input shaft of the gearbox and having a radial bearing (3) in one piece with it, forming a plate for fixing the guide tube to the outer face of the wall of the casing of the gearbox, and a sealing ring with lip, engaged inside the sleeve, and comprising a reinforcement (5) containing a tubular bearing (6) adapted to be engaged with force-fit into the tubular sleeve (1) of the guide tube, said tubular bearing (6) being continued, at one of its ends, by an inwardly directed radial bearing (7), at the end of which there is realized a seal with lip (9), characterized by the fact that said tubular bearing (6) of the reinforcement (5) is continued, at its other end, by an outwardly directed radial bearing (8), on which is realized an annular sealing beading (13) adapted for coming into contact with the outer face of the wall of the casing.

2. Guide tube according to Claim 1, characterized by the fact that said annular beading (13) is realized at the end of the radial bearing (8) of the reinforcement (5).

3. Guide tube according to Claim 2, characterized by the fact that the annular beading (5) comprises a part (13a), projecting from the radial bearing (8) of the reinforcement (5) which carries it, towards the wall of the casing and, on the opposite face of said radial bearing (8), a part (13b) enabling sealing to be assured between said radial bearing (8) of the reinforcement (5) and the radial bearing (3) forming a fixing plate for the guide tube onto the outer face of the wall of the casing of the gearbox.

4. Guide tube according to Claim 3, characterized by the fact that the principal part (13a) of the beading has a substantially trapezoidal section.

5. Guide tube according to any one of the preceding Claims, characterized by the fact that the radial bearing (3) forming a fixing plate for the guide tube is deformed, at least locally, to have contact zones (14) with the radial bearing (8) of the reinforcement of the sealing ring.

6. Guide tube according to Claim 5, characterized by the fact that said radial bearing (3) forming the fixing plate for the guide tube comprises a ring-shaped deformed zone (14) forming a rib projecting towards the radial bearing (8) of the reinforcement (5).

7. Guide tube according to Claim 6, characterized by the fact that said ring-shaped deformed zone (14) is realized in such a manner as to come into contact with the radial bearing (8) of the reinforcement (5) at a short distance inwardly from the annular sealing beading (13).

## Patentansprüche

1. Führungshülse mit integrierter Dichtung für Kupplungsausrücklager eines Kraftfahrzeuggetriebes, mit
einer rohrförmigen Muffe (1) zum axialen Umfassen der Antriebswelle des Getriebes, wobei die Muffe einstückig einen radialen Bereich (3) aufweist, der eine Halteplatte zur Befestigung der Führungshülse auf der Außenfläche der Wand des Getriebegehäuses bildet, und
einem Dichtring mit Lippe, der innen an der Muffe anliegt und eine Bewehrung (5) mit röhrenförmigem Bereich (6) zum Eindrücken unter Kraftanwendung in die Muffe (1) der Führungshülse beinhaltet, wobei der röhrenförmige Bereich (6) an seinem einen Ende um einen nach innen ragenden radialen Bereich (7) erweitert ist, dessen Ende eine Dichtlippenanordnung (9) aufweist,
dadurch gekennzeichnet,
daß der röhrenförmige Bereich (6) der Bewehrung (5) an seinem anderen Ende um einen nach außen ragenden radialen Bereich (8) erweitert ist, auf dem ein in Umfangsrichtung verlaufender Dichtwulst (13) für den Kontakt mit der Außenfläche der Gehäusewand vorgesehen ist.

2. Führungshülse nach Anspruch 1, dadurch gekennzeichnet, daß der in Umfangsrichtung verlaufende Dichtwulst (13) am Ende des radialen Bereichs (8) der Bewehrung (5) vorgesehen ist.

3. Führungshülse nach Anspruch 2, dadurch gekennzeichnet, daß der in Umfangsrichtung verlaufende Dichtwulst (13) einen von dem ihn tragenden radialen Bereich (8) der Bewehrung (5) in Richtung der Gehäusewand vorspringenden Abschnitt und auf der gegenüberliegenden Fläche des radialen Bereichs (8) einen Abschnitt (13b) aufweist, der das Abdichten zwischen dem genannten radialen Bereich (8) der Bewehrung (5) und dem radialen Bereich (3), der eine Halteplatte zur Befestigung der Führungshülse auf der Außenfläche der Wand des Getriebegehäuses bildet, bewirken kann.

4. Führungshülse nach Anspruch 3, dadurch gekennzeichnet, daß der Hauptabschnitt (13a) des Wulstes einen im wesentlichen trapezförmigen Querschnitt aufweist.

5. Führungshülse nach einem der vorhergehenden Ansprüche, dadurch gekennzeichnet, daß der radiale Bereich (3), der eine Halteplatte zur Befestigung der Führungshülse bildet, wenigstens örtlich so verformt ist, daß Kontaktbereiche (14) mit dem radialen Bereich (8) der Bewehrung des Dichtrings gebildet werden.

6. Führungshülse nach Anspruch 5, dadurch gekennzeichnet, daß der radiale Bereich (3), der eine Halteplatte zur Befestigung der Führungshülse bildet, einen verformten Bereich in Form eines Kranzes (14) aufweist, der eine in Richtung des radialen Bereichs (8) der Bewehrung (5) vorspringende Rippe bildet.

7. Führungshülse nach Anspruch 6, dadurch gekennzeichnet, daß der kranzförmig verformte Bereich (14) so vorgesehen ist, daß er bei geringem Abstand nach innen zum in Umfangsrichtung verlaufenden Dichtwulst (13) in Kontakt mit dem radialen Bereich (8) der Bewehrung (5) kommt.
